# FASCICULE DE BREVET EUROPEEN

(11) **EP 0 907 521 B1**
(45) Date de publication et mention de la délivrance du brevet: **09.10.2002**
(21) Numéro de dépôt: 97931855.7
(22) Date de dépôt: 03.07.1997
(51) Int. Cl.: B60J 5/00

(54) **CARROSSERIE DE VEHICULE AUTOMOBILE COMPORTANT UNE PORTE A DEUX BATTANTS ARTICULES**
KRAFTFAHRZEUGKAROSSERIE MIT EINER DOPPELFÜGELIGEN SCHWENKBAREN TÜR
MOTOR VEHICLE BODY COMPRISING A HINGED DOUBLE WING DOOR

(30) Priorité: 04.07.1996 FR 9608331
(43) Date de publication de la demande: 14.04.1999
(73) Titulaire: Renault s.a.s., 92100 Boulogne Billancourt (FR)
(72) Inventeur: ANBARI, Bilal, F-78180 Montigny-le-Bretonneux (FR); GROSDIDIER, François, F-92700 Colombes (FR)
(86) Numéro de dépôt international: FR9701188
(87) Numéro de publication internationale: WO98001311

(56) Documents cités:
- EP-A- 0 437 991

## Description

L'invention concerne une carrosserie de véhicule automobile comportant une porte à deux battants articulés qui recouvrent d'une part de l'extérieur, une ouverture correspondante de la carrosserie, et d'autre part, par leur partie supérieure, une gouttière d'évacuation des eaux de ruissellement localisée le long d'un côté du toit du véhicule.

L'invention concerne plus particulièrement une telle carrosserie qui possède une porte à deux battants articulés, dont les bords verticaux mobiles sont adjacents en position de fermeture et dont l'ouverture permet l'accès à une surface de chargement du véhicule.

On a constaté un contact de frottement local au cours du mouvement de rotation du coin supérieur du premier battant par rapport au deuxième battant, lorsque ceux-ci sont proches de leur position de fermeture. Un tel contact de frottement génère une détérioration locale des revêtements protecteurs des battants.

Pour remédier à cet inconvénient une technique connue consiste à réaliser une bordure étagée raccordée à la surface extérieure du battant à proximité de son coin supérieur mobile.

Au cours du mouvement de fermeture de l'autre battant. le coin supérieur de ce dernier est alors superposé à ladite bordure étagée et évite le contact mutuel des deux battants.

On constate néanmoins qu'un contact de frottement accidentel subsiste au cours de la manoeuvre simultanée des deux battants.

L'invention a pour objet de remédier à l'inconvénient précité.

Selon l'invention le bord supérieur du premier battant est accolé à une butée d'écartement solidaire d'un bord de montage du deuxième battant, et ladite butée est mise en appui sur une protubérance de blocage portée par le premier battant, dans le but d'éviter une manoeuvre simultanée et une mise en contact desdits battants au voisinage de l'ouverture de la carrosserie.

Selon une autre caractéristique de l'invention, la protubérance de blocage est constituée par une portion de la surface emboutie du panneau intérieur du battant de la porte.

La carrosserie ainsi équipée possède un aspect esthétique amélioré du fait que la protubérance de blocage et la butée d'écartement sont simultanément masquées par le bord d'assemblage des panneaux extérieur et intérieur d'un même battant de la porte, lorsque les deux battants occupent une position de fermeture.

D'autres caractéristiques et avantages apparaîtront à la lecture de la description d'un exemple de réalisation de la carrosserie en référence au dessin annexé dans lequel :
- la figure 1 est une vue en perspective de la partie arrière de la carrosserie d'un véhicule utilitaire,
- la figure 2 est une vue en perspective de la partie supérieure de la carrosserie en position partiellement ouverte des deux battants articulés de la porte.
- la figure 3 est une vue en coupe horizontale à échelle agrandie de la partie supérieure de la carrosserie suivant la ligne III-III de la figure 2.
- la figure 4 est une coupe longitudinale à échelle agrandie de la partie supérieure de la carrosserie réalisée conformément à l'invention, suivant la ligne IV-IV de la figure 1.

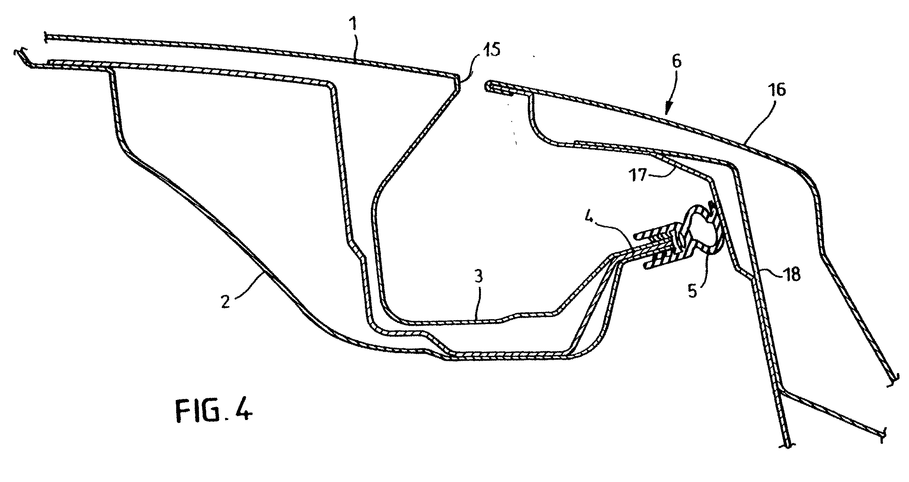

Ainsi que cela est représenté au dessin, la traverse supérieure 2 du toit 1 (figure 4) se prolonge vers l'arrière par une gouttière 3 d'évacuation des eaux de ruissellement. Le bord 4 de la gouttière est assemblé au bord correspondant de la traverse et porte selon une disposition connue en soi une bande d'étanchéité 5.

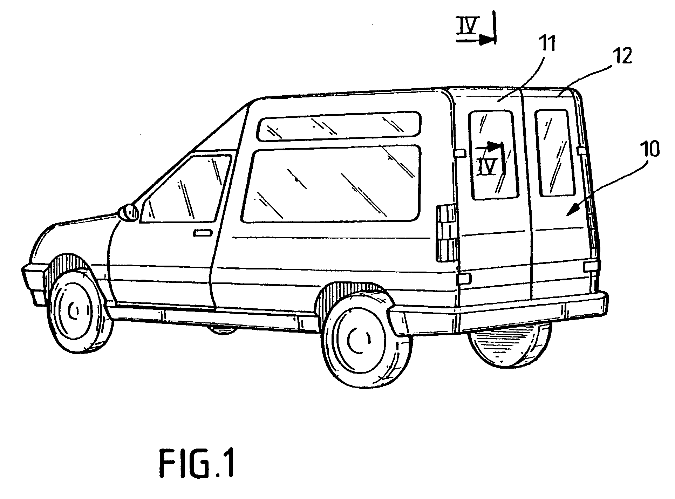

La gouttière 3 est recouverte par la partie supérieure 6 du châssis des deux battants articulés 11, 12 de la porte 10. Les battants 11, 12 recouvrent de l'extérieure une ouverture 13 de la carrosserie qui permet par exemple d'accéder au plancher de chargement du véhicule utilitaire représenté à la figure 1.

Dans la structure de porte représentée, la partie supérieure 6 de chaque battant 11 ou 12 est rabattue en direction du toit 1 atteignant sensiblement le bord arrière 15 de celui-ci.

La partie supérieure 6 du battant tel que 11 ou 12 est constituée par une paroi extérieure 16 dont le bord extrême est assemblé à une paroi intérieure 17.

Les parois 16, 17 sont par ailleurs rigidifiées par une tôle 18 qui s'étend intérieurement à la structure de la partie 6 du battant.

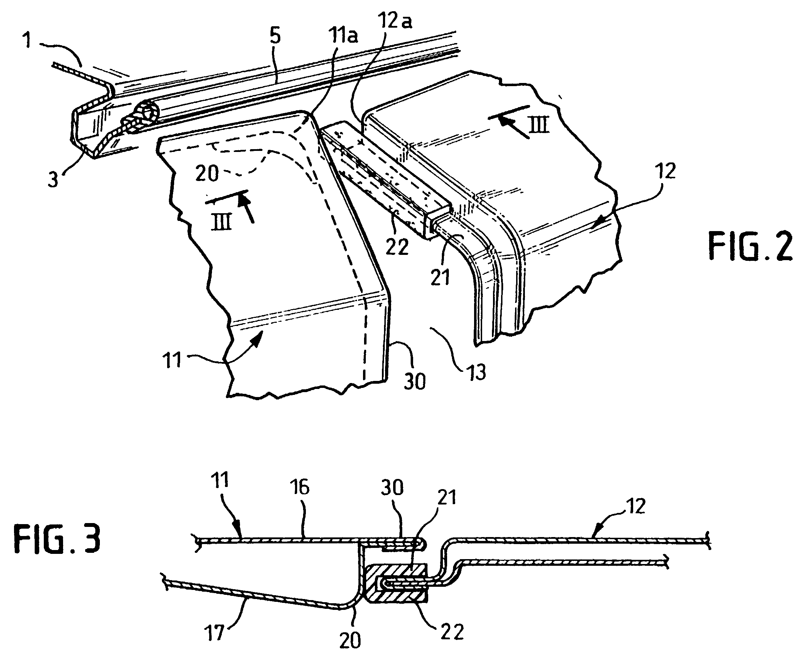

Dans le but d'éviter la mise en contact initiale des battants 11 et 12 au voisinage de l'ouverture 13 par suite de la fermeture simultanée de ceux-ci, il est présentement proposé un agencement de butées d'écartement et de protubérance de blocage mieux représenté aux figures 2 et 3.

A cet effet le bord supérieur du battant 11 porte une portion de surface emboutie 20 localisée dans le coin intérieur supérieur 11a dudit battant. La portion 20 est avantageusement emboutie avec la paroi intérieure 17 du battant 11.

La portion 20 constitue de la sorte une protubérance de blocage du deuxième battant 12. Ce dernier possède un bord de montage 21 d'une butée d'écartement 22 montée dans le coin intérieur supérieur 12 a du battant 12. La butée d'écartement 22 peut être constituée à titre d'exemple par un caoutchouc synthétique dur solidaire d'un profil d'étanchéité emboîté sur le bord de montage 21.

Au cours de la fermeture des battants 11, 12 et ainsi que cela est montré à la figure 2, le rapprochement desdits battants de l'ouverture 13 permet préventivement la mise en appui de la butée 22 sur la protubérance 20. II en résulte que la manoeuvre des battants 11, 12 est empêchée tant que le battant 12 porteur de la butée 22 n'est pas prioritairement au contact de l'ouverture 13. Cette manière de procéder permet de terminer la manoeuvre par la fermeture de la porte par une simple manoeuvre du battant 11 porteur de la protubérance 20.

La combinaison précitée de la butée d'écartement 22 et de la protubérance 20 de blocage favorise le processus de fermeture de la porte suivant lequel le battant 12 est actionné prioritairement vers sa position de fermeture au contact de la bande d'étanchéité 5.

Le contact mutuel des battants 11 et 12 est de ce fait évité lorsque ceux-ci sont au voisinage de l'ouverture 13 ainsi que cela est montré à la figure 2.

Dans le but de masquer les éléments de butée et de blocage 22, 20, le bord d'assemblage 30 de la paroi extérieure 16 et de la paroi intérieure 17 s'étend également au-dessus des éléments 22, 20 et confère à la porte 3 une bonne qualité de montage et de finition.

## Revendications

1. Carrosserie de véhicule automobile comportant une porte (10) à deux battants articulés (11, 12) qui recouvrent d'une part de l'extérieur, une ouverture (13) correspondante de la carrosserie, et d'autre part, par leur partie supérieure (6) une gouttière (3) d'évacuation des eaux de ruissellement, localisée le long d'un côté du toit (1) du véhicule, **caractérisé par le fait que** le bord supérieur du premier battant (11) est accolé à une butée d'écartement (22) solidaire d'un bord de montage (21) du deuxième battant (12) et que la dite butée (22) est mise en appui sur une protubérance (20) de blocage, portée par ledit premier battant (11) dans le but d'éviter une manoeuvre simultanée et une mise en contact desdits battants (11, 12) au voisinage de l'ouverture de la carrosserie.

2. Carrosserie selon la revendication 1, **caractérisée par le fait que** la protubérance de blocage (20) est constituée par une portion de la surface emboutie du panneau intérieur (17) de l'un des battants (11).

3. Carrosserie selon la revendication 2, **caractérisée par le fait que** la protubérance de blocage (20) et la butée d'écartement (22) sont masquées par le bord d'assemblage (30) des parois extérieure (16) et intérieure (17) d'un même battant (11) de la porte.

4. Carrosserie selon l'une quelconque des revendications 1 à 3, **caractérisée par le fait que** la butée d'écartement 22 est solidaire d'un profil d'étanchéité emboîté sur le bord de montage 21.

## Patentansprüche

1. Kraftfahrzeugkarosserie, die eine Tür (10) mit zwei angelenkten Türflügeln (11, 12) aufweist, welche einerseits von außen eine entsprechende Öffnung (13) der Karosserie und andererseits mit ihrem oberen Teil (6) eine Rinne (3) zum Ableiten des abfließenden Wassers abdecken, die sich längs einer Seite des Daches (1) des Fahrzeugs befindet, **dadurch gekennzeichnet, daß** die obere Kante des ersten Türflügels (11) an einem Abstandsanschlag (22) angeordnet wird, der fest mit einer Montagekante (21) des zweiten Türflügels (12) verbunden ist, und daß dieser Anschlag (22) an einem von dem ersten Türflügel (11) getragenen Blockiervorsprung (20) zur Anlage gebracht wird, um eine gleichzeitige Betätigung und ein Inkontaktbringen dieser Türflügel (11, 12) in der Nähe der Öffnung der Karosserie zu verhindern.

2. Karosserie nach Anspruch 1, **dadurch gekennzeichnet, daß** der Blockiervorsprung (20) von einem tiefgezogenen Oberflächenteil der inneren Platte (17) eines der Türflügel (11) gebildet wird.

3. Karosserie nach Anspruch 2, **dadurch gekennzeichnet, daß** der Blockiervorsprung (20) und der Abstandsanschlag (22) von der Verbindungskante (30) der Außenwand (16) und der Innenwand (17) eines selben Türflügels (11) der Tür verdeckt werden.

4. Karosserie nach einem der Ansprüche 1 bis 3, **dadurch gekennzeichnet, daß** der Abstandsanschlag (22) mit einem Dichtungsprofil einstückig ist, das auf die Montagekante (21) gesteckt ist.

## Claims

1. An automobile vehicle bodywork comprising a door (10) with two articulated flaps (11, 12) which cover, on the one hand, externally, a corresponding opening (13) of the bodywork and, via their upper portion (6), a water drainage gutter (3) located along one side of the roof (1) of the vehicle, **characterised in that** the upper edge of the first flap (11) is brought alongside a distancing stop (22) rigid with an assembly edge (21) of the second flap (12) and **in that** the stop (22) is caused to bear on a locking projection (20) borne by the first flap (11) in order to prevent the simultaneous manoeuvring of and contact between the flaps (11, 12) in the vicinity of the bodywork opening.

2. A bodywork as claimed in claim 1, **characterised in that** the locking projection (20) is formed by a portion of the stamped surface of the inner panel (17) of one of the flaps (11).

3. A bodywork as claimed in claim 2, **characterised in that** the locking projection (20) and the distancing stop (22) are masked by the assembly edge (30) of the outer (16) and inner (17) walls of the same flap (11) of the door.

4. A bodywork as claimed in one of claims 1 to 3, **characterised in that** the distancing stop (22) is rigid with a sealing profile fitted on the assembly edge (21).
